# EUROPEAN PATENT APPLICATION

(11) **EP 3 531 226 A1**
(43) Date of publication of application: **28.08.2019**
(21) Application number: 19158367.3
(22) Date of filing: 20.02.2019
(51) Int. Cl.: G05D 7/06

(54) **VALVE DEVICE FOR FLOW REGULATION**

(30) Priority: 21.02.2018 IT 201800002900
(71) Applicant: Enolgas Bonomi S.p.A., 25062 Concesio (Brescia) (IT)
(72) Inventor: LICCIARDELLO, Gaetano, 25062 Concesio (Brescia) (IT)
(74) Representative: Pulieri, Gianluca Antonio

(57) **Abstract**

A valve device (1) for flow regulation comprises a ball valve (2), an actuator (4) connected to the shutter (23) of the ball valve to control its positioning in the limit closed position or in the limit maximum open position or in a predefined partially open intermediate position, flow measurement means (8) operating upstream of the shutter (23), suitable to measure the flow of water entering the valve (2) and generating a corresponding flow signal (Sq), setting means for setting a predefined desired flow (Qd), and electronic control unit (6) operatively connected to the flow measurement means (8), to the means for setting the desired flow rate, and to the actuator (4), suitable to receive said flow signal (Sq), to process it and generate a position signal (Sp) according to the desired flow rate (Qp), transmitted to the actuator (4) to position the shutter (23) so as to obtain upstream said desired flow (Qd). The device is configured or programmed so as to tolerate variations in the flow rate measured within a predefined tolerance range, without the position of the shutter being modified.

## Description

The present invention relates to a valve device for flow regulation for complex distribution systems, for example a heating system in which the hot water is distributed by a thermal power plant to multiple apartments.

Other applications, however, are possible in the domestic environment, such as cooling systems, or in the industrial sector, such as distribution systems for a multi-utility work fluid.

For clarity of exposure, reference will be made to the application in the context of heating systems.

As is known, the flow of water sent from the thermal power plant to the apartments is defined in the design step of the system, taking into account the energy requirements for the coldest day of the year, determined by meteorological statistics. The pump is therefore selected to guarantee this flow.

Furthermore, to allow each apartment to vary the energy supply according to their needs, an operating zone valve is provided along the system branch that supplies the apartment.

The zone valve is an ON/OFF shut-off valve that allows you to open or close the power supply from the system to the apartment, either manually or according to preset programs using thermostats or programmable thermostats.

Normally, therefore, the system works outside the project conditions and the pump has to manage a flow surplus.

For this reason, at the pump delivery, a balancing valve is usually placed which guarantees a constant flow rate within a predefined range of pressures upstream of the valve itself.

However, for technical reasons, these valves are subdivided according to the guaranteed flow rate, so the storage management is extremely complex, having to provide tens of articles, according to the guaranteed flow rate, for each pipe diameter.

There are also adjustable balancing valves, for which one can adjust the flow to be guaranteed. These valves allow solving the problem of storage management, but these are very complex and expensive products.

In more advanced systems, the pump is controlled by an electric motor with inverter, so as to regulate the motor revolutions according to the flow requirements. However, these systems are more expensive and difficult to maintain.

It is an object of the present invention to simplify the structure of the aforementioned systems by providing a valve device for regulating the flow rate that meets the requirements of the sector and overcomes the aforementioned drawbacks.

Such an object is achieved by a valve device according to claim 1. The dependent claims describe further advantageous embodiment variants.

The features and advantages of the valve device according to the present invention will appear more clearly from the following description, made by way of an indicative and non-limiting example with reference to the accompanying figures, in which:
- figure 1 shows a valve device according to an embodiment of the present invention, with the valve in closed configuration;
- figure 2 shows the valve device in figure 1, with the valve in partially open configuration;
- figure 3 shows the valve device in figures 1 and 2, with the valve in open configuration; and
- figure 4 shows a valve device according to a further embodiment of the present invention.

With reference to the accompanying drawings, reference numeral 1 indicates a valve device for regulating the flow rate, the use whereof is provided for each branch of the system that supplies a utility.

The valve device 1 comprises a ball valve 2, an actuator 4, an electronic control unit 6 and flow measurement means 8.

The ball valve 2 comprises an inlet duct 21, an outlet duct 22 and a ball shutter 23 operative between the inlet duct 21 and the outlet duct 23.

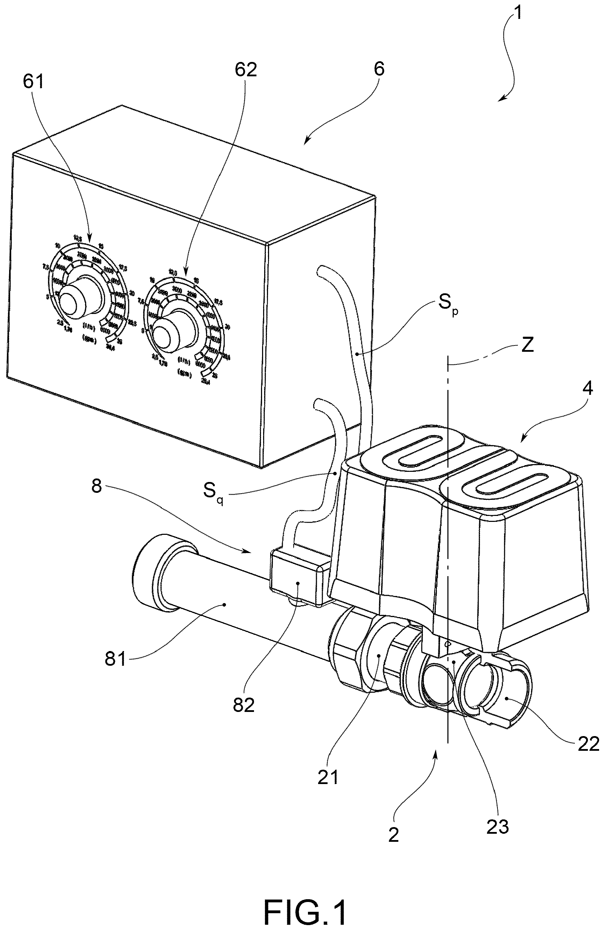

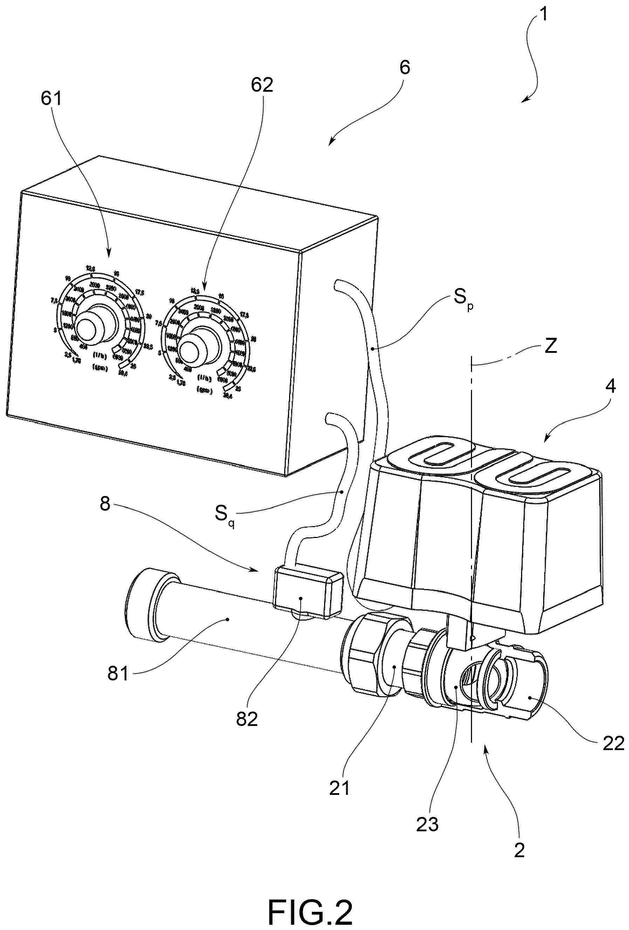

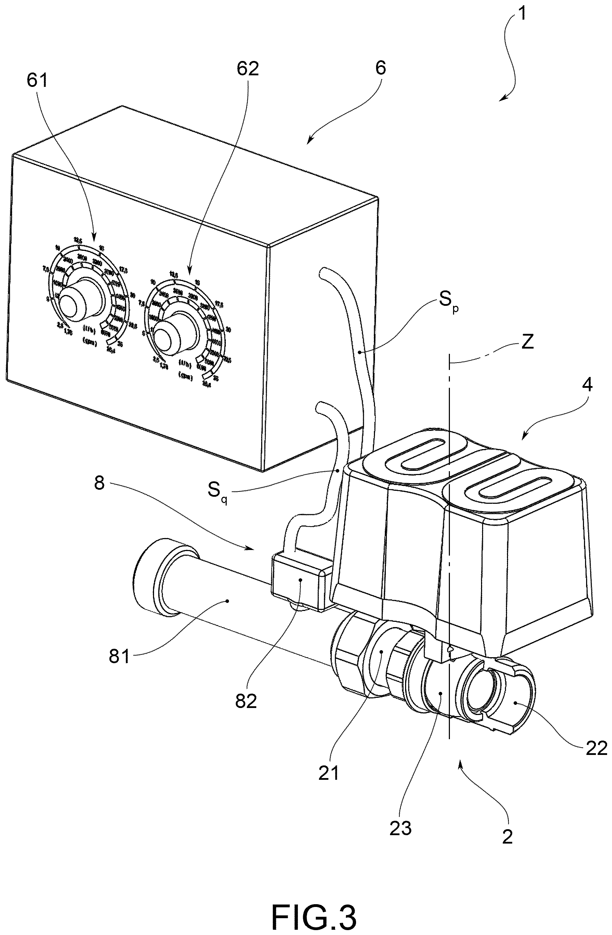

The shutter 23 can rotate about a rotation axis Z so as to take a limit closed position in which it prevents the passage of water between the inlet duct 21 and the outlet duct 22 (closed valve configuration, figure 1), a partially open intermediate position (partially open configuration of the valve, figure 2) and a limit maximum open position (maximum open valve configuration, figure 3) .

The actuator 4, comprising an electric motor, usually in direct current or of the stepping type, is suitable for moving the shutter 23 between the closed position and the maximum opening position, making it assume a desired intermediate open position.

The flow measuring means 8 are operative upstream of the shutter 23, for example along an auxiliary duct 81 connected upstream of the inlet duct 21.

For example, said measuring means 8 comprise a Vortex meter with a shaped body applied inside said auxiliary duct 81.

According to further embodiments, said measuring means comprise a magnetic or mechanical or ultrasonic measurement device.

Moreover, said measurement means 8 comprise a detector 82 suitable for generating a flow signal Sq as a function of the detected flow rate.

The electronic control unit 6 is operatively connected to the measuring means 8 and to the actuator 4, so as to receive said flow signal Sq from the detector 82, process it and transmit a position signal Sp to the actuator 4, on the basis whereof it imposes to the shutter 23 the desired position (closing, intermediate opening or maximum opening).

The valve device 1 further comprises means for setting the flow rate suitable for setting a predefined value at the desired constant flow rate Qd.

For example, according to the illustrated embodiment, said setting means are integrated with the electronic control unit 6 and comprise at least one potentiometer.

For example, a first dial 61 of a first potentiometer is provided, for example for setting a constant flow in heating (for example, with a full scale of 2400 liters/hour), and a second dial 62 of a second potentiometer, for setting a constant flow in cooling (for example, with a full scale of 2400 liters/hour).

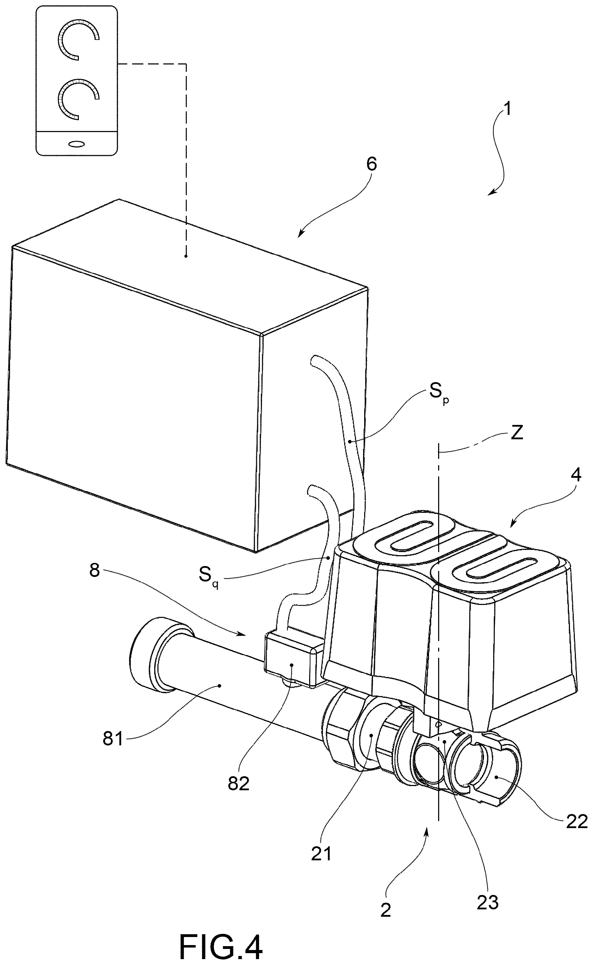

According to further embodiments, the setting means are remote with respect to the control unit 6 and operationally in communication therewith through communication protocols. For example, according to the embodiment illustrated in figure 4, the setting means are implemented in a software that can be executed on a mobile phone, tablet, PC or the like. For example, a mobile application can display two virtual dials on the display, similar to the first and second dial 61, 62 described above.

During normal operation of the heating system, the measuring means perform up to 23 measurements of the water flow upstream of the shutter.

In the presence of a decrease in the measured flow rate with respect to the desired flow rate, said measuring means 8 emit a flow signal Sq interpreted by the electronic control unit 6 and processed so as to generate a position signal Sp which corresponds to a greater opening of the valve 2.

In the presence of an increase in the measured flow with respect to the desired flow Qd, said measuring means 8 emit a flow signal Sq interpreted by the electronic control unit 6 and processed so as to generate a position signal Sp which corresponds to a smaller opening of the valve 2.

Moreover, the valve device 1 is configured or programmed so as to tolerate variations in the flow rate measured within a predefined tolerance range, without the position of the shutter being modified.

According to an embodiment, the electronic control unit 6 is configured or programmed to tolerate variations in the flow rate measured within a predefined tolerance range, for example equal to 5% of the full scale. In other words, if the variation in the measured flow is within said tolerance range, the position of the shutter is not changed.

Advantageously, this allows improving the reliability of the valve device, since too frequent variations of the position of the shutter could compromise the valve seals.

Moreover, according to a preferred embodiment, the device, and in particular the electronic control unit 6, is configured or programmed to self-learn a tolerance range, i.e. to modify said tolerance range (for example, within a limit of between 2% and 5% of the full scale), depending on the frequency and the magnitude of the variations in the measured flow.

According to an application of the invention, a closed-cycle fluid distribution system, for example a heating or cooling system, comprises:
- a pump;
- a main distribution branch connected to the pump feed;
- secondary distribution branches, each diverted from the main branch;
- a plurality of users, each user being supplied by the respective secondary branch;
- a plurality of said valve devices, each valve device being arranged on a respective secondary branch, upstream of the utility.

Innovatively, the valve device according to the present invention meets the requirements of the sector, since it allows maintaining a constant flow towards the utility, equal to the desired one. At the same time, this device overcomes the drawbacks mentioned above, as it greatly simplifies the storage management.

It is clear that a man skilled in the art may make changes to the valve device described above in order to meet incidental needs, all falling within the scope of protection defined in the following claims.

## Claims

1. Valve device (1) for flow regulation, comprising:
- a ball valve (2) comprising an inlet duct (21), an outlet duct (22) and a shutter (23) placed between them, wherein said shutter (23) is rotatable between a limit closed position and a limit maximum open position;
- an actuator (4) connected to the shutter (23) to control its positioning in the limit closed position or in the limit maximum open position or in a predefined partially open intermediate position;
- flow measurement means (8) operating upstream of the shutter (23), suitable to measure the flow of water entering the valve (2) and generating a corresponding flow signal (Sq);
- setting means for setting a predefined desired flow (Qd);
- an electronic control unit (6) operatively connected to the flow measurement means (8), to the means for setting the desired flow rate, and to the actuator (4), suitable to receive said flow signal (Sq), to process it and generate a position signal (Sp) according to the desired flow rate (Qp), transmitted to the actuator (4) to position the shutter (23) so as to obtain upstream said desired flow (Qd),
said device being configured or programmed so as to tolerate variations in the flow rate measured within a predefined tolerance range, without the position of the shutter being modified.

2. Valve device according to claim 1, wherein the electronic control unit (6) is configured or programmed so as to tolerate variations in the measured flow rate within said predefined tolerance range.

3. Valve device according to any one of the preceding claims, wherein said setting means reside in said electronic control unit (6) and comprise at least one potentiometer.

4. Valve device according to any one of claims 1 to 2, wherein the setting means are remote with respect to the control unit (6) and operationally in communication therewith through a communication protocol.

5. Valve device according to claim 4, comprising a mobile phone configured through an application for implementing said setting means.

6. Valve device according to any one of the preceding claims, comprising an auxiliary duct (81) applied to the inlet duct (21) of the valve (2), along which said means for measuring the flow rate (8) are operative.

7. Valve device according to any one of the preceding claims, wherein said measuring means (8) comprise a Vortex meter.

8. Valve device according to any one of the preceding claims, wherein the device, and in particular the electronic control unit, is configured or programmed to self-learn a tolerance range, i.e. to modify said tolerance range (for example, within a limit of between 2% and 5% of the full scale), depending on the frequency and the magnitude of the variations in the measured flow.

9. Distribution system for a closed cycle fluid, comprising:
- a pump;
- a main distribution branch connected to the pump feed;
- secondary distribution branches, each diverted from the main branch;
- a plurality of users, each user being supplied by the respective secondary branch;
- a plurality of valve devices, each valve device being according to any one of the preceding claims;
- wherein each valve device is operative along the respective secondary branch upstream of the user.

10. System according to claim 9, wherein said system is a heating or cooling system.
